**Europäisches Patentamt**

**European Patent Office**

**Office européen des brevets**

(11) Veröffentlichungsnummer: **0 359 969**
**A1**

## (12) EUROPÄISCHE PATENTANMELDUNG

(21) Anmeldenummer: **89114614.4**

(22) Anmeldetag: **08.08.89**

(51) Int. Cl.5: **B01D 53/00 , C02F 3/10**

(30) Priorität: **19.09.88 DE 8811851 U**

(43) Veröffentlichungstag der Anmeldung:
**28.03.90 Patentblatt 90/13**

(84) Benannte Vertragsstaaten:
**AT BE CH DE ES FR GB GR IT LI NL SE**

(71) Anmelder: **ME/BO/CO VERFAHRENSTECHNIK GMBH & CO. KG**
**Finienweg 7**
**D-2807 Achim-Baden(DE)**

(72) Erfinder: **Born, Rainer, Dr. - Ing.**
**Querweg 27**
**D - Achim-Uesen(DE)**

(74) Vertreter: **Stark, Walter, Dr.-Ing.**
**Moerser Strasse 140**
**D-4150 Krefeld(DE)**

(54) **Filter zur Reinigung von Fluiden.**

(57) Die Erfindung betrifft ein Filter zur Reinigung von Fluiden mit einer Aktivkohle enthaltenden Füllung, bei der die Füllung aus flexiblen, ungeordneten, sich unregelmäßig berührenden Folienstreifen aus Kunststoff besteht, die mit Aktivkohle beschichtet und mit einer Biozenose besiedelt sind. Bei diesem Filter findet auch ein biochemischer Stoffwechsel statt, wobei das Wachstum der Biozenose aber nicht so stark wird, daß die Durchtrittsquerschnitte zuwachsen.

Fig. 1

EP 0 359 969 A1

## Filter zur Reinigung von Fluiden

Die Erfindung betrifft ein Filter zur Reinigung von Fluiden mit einer Aktivkohle enthaltenden Füllung. Derartige Filter werden eingesetzt zur Geruchsbeseitigung, zur Entfernung von Schadstoffen aus Abluft, aber auch zur Entfernung von organischen Bestandteilen, die von der Abluft mitgeführt werden.

Bekannte Filter enthalten eine Füllung in Form einer Schüttung aus Aktivkohlekörnern. Wenn die Absorptionsfähigkeit der Aktivkohle erschöpft ist, muß die Füllung gewechselt werden. Die verbrauchte Aktivkohle muß thermisch unter hohem Aufwand bei Temperaturen von über 1.200 °C beseitigt werden. Die verbrauchte Aktivkohle kann aber auch desorbiert werden. Das führt je nach der angewendeten Desorptionsmethode zu flüssigen oder gas- bzw. dampfförmigen Produkten, die wiederum Beseitigungsprobleme mit sich bringen.

Man hat auch versucht, parallel zur Absorption der Aktivkohle biochemische Stoffwechselvorgänge auszulösen, und zwar durch die Besiedelung der Aktivkohle mit geeigneter Biozenose, die sowohl die angelagerten organischen Abluftbestandteile als auch die unmittelbar der Abluft entzogenen Bestandteile als Nahrung benutzt. Dabei entsteht jedoch das Problem, die wichtigen Parameter Nahrungsangebot, nämlich die von der Abluft mitgeführten organischen Bestandteile, mit dem Sauerstoffangebot und der Feuchtigkeit in einem Gleichgewicht zu halten, so daß einerseits ein biologischer Stoffwechsel stattfindet und andererseits das Wachstum der Biozenose nicht so stark wird, daß die Durchtrittsquerschnitte zwischen den Aktivkohlekörnern zuwachsen. Diese Probleme sind bisher nicht gelöst worden.

Aufgabe der Erfindung ist es, ein Filter anzugeben, in dem ein biochemischer Stoffwechsel stattfindet und bei dem der Strömungswiderstand durch Wachstum der Biozenose nicht oder nur unwesentlich beeinträchtigt wird.

Diese Aufgabe wird dadurch gelöst, daß die Füllung aus flexiblen, ungeordneten, sich unregelmäßig berührenden Folienstreifen aus Kunststoff besteht, die mit Aktivkohle beschichtet und mit einer Biozenose besiedelt sind. Bei diesem Filter ist ein Zuwachsen der Füllung durch die aufwachsende Biozenose weitgehend ausgeschlossen, weil die Folienstreifen von der durchströmenden Luft auch bewegt werden, so daß vorhandene Strömungswege freigespült werden oder neue Strömungswege gebildet werden. Das gilt insbesondere dann, wenn nach bevorzugter Ausführung der Erfindung die Folienstreifen hängend angeordnet sind und das Filter von oben nach unten durchströmt wird. Dann wird nämlich auch abgestorbener, biologischer Bewuchs aus der Füllung transportiert und fällt unten aus der Füllung aus. Dort kann er in bekannter Weise aufgefangen werden.

Mit einer derartigen Füllung aus Folienstreifen lassen sich ohne weiteres Filterflächen bis zu 400 $m^2/m^3$, vorzugsweise 200 bis 300 $m^2/m^2$, realisieren. Die Folienstreifen selbst können den gegebenen Verhältnissen angepaßt sein. Ihre Breite kann zwischen 2 cm und 6 cm, gegebenenfalls auch mehr, betragen. Sie können glatte oder geprägte Oberflächen aufweisen oder selbst geprägt sein.

Die Handhabung der Folienstreifen insbesondere beim Wechsel der Füllung des Filters ist einfacher, wenn die Folienstreifen zu Bündeln zusammengefaßt sind. Um zu verhindern, daß die Folienstreifen des Bündels sich während des Betriebes ordnen, ist es zweckmäßig, die Folienbündel mittig zu verdrillen und sie mit dem verdrillten Bereich über Tragstäbe zu hängen. Auf diesen Tragstäben können die Folienstreifen mit ihren verdrillten Bereichen befestigt werden.

Das Filter kann nicht nur zur Reinigung von Abluft, sondern auch zur Reinigung von Abwasser eingesetzt werden, wenn die freien Enden der Folienstreifen beschwert oder befestigt werden, um ein Aufschwimmen zu verhindern. Das ist natürlich nicht erforderlich bei der Verwendung des Filters in Rieseltürmen (Tropfkörpern).

Im folgenden wird ein in der Zeichnung dargestelltes Ausführungsbeispiel der Erfindung erläutert; es zeigen:

Fig. 1 in schematischer Darstellung einen Vertikalschnitt durch ein Filter zur Abluftreinigung,

Fig. 2 eine Draufsicht auf mehrere über Tragstäbe gehängt Bündel von Folienstreifen.

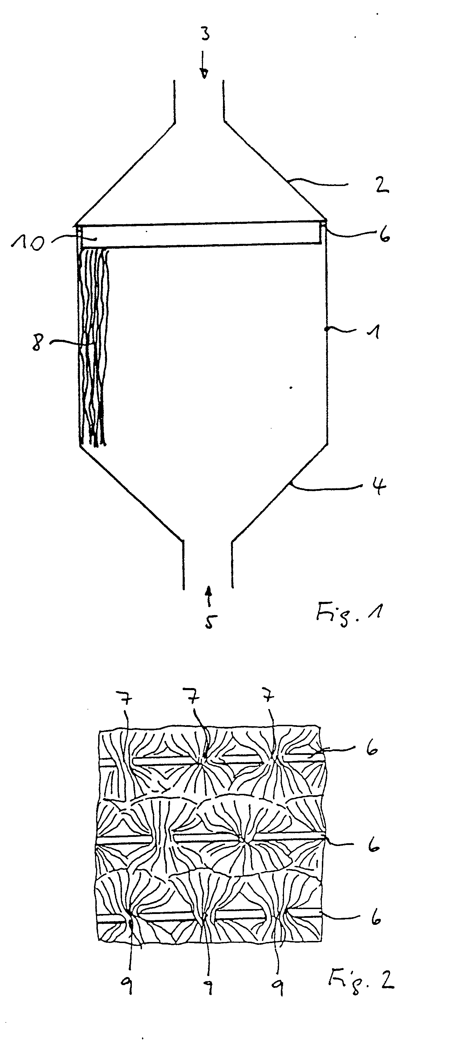

Das in der Zeichnung dargestellte Filter besitzt ein Gehäuse 1, dessen oberes Ende 2 trichterförmig in einen Zuluftstutzen 3 übergeht und dessen unteres Ende 4 trichterförmig in einen Abluftstutzen 5 übergeht. Unterhalb des oberen Endes 2 sind eine Reihe von Tragstäben 6 angeordnet, die sich über den Gehäusequerschnitt erstrecken. Über die Tragstäbe 6 sind Bündel 7 aus Folienstreifen 8 gehängt. Die Folienstreifen 8 bestehen aus Kunststoff und sind mit Aktivkohle beschichtet sowie mit einer Biozenose besiedelt. Das ist im einzelnen nicht dargestellt. Die Folienstreifen 8 hängen von den Tragstäben 6 herab und erstrecken sich im wesentlichen über die gesamte Höhe des Gehäuses 1.

Die Bündel 7 sind in ihrem mittigen Bereich 9 verdrillt und mit diesen verdrillten Bereichen 9 über die Tragstäbe gehängt. Über die verdrillten Bereiche 9 jedes Tragstabes 6 ist jeweils ein Profil 10 gesetzt, welches die Bündel 7 klemmend am zugeordneten Tragstab 6 hält. Es versteht sich, daß zwischen den Profilen 10 benachbarter Tragstäbe genügend Platz für den Durchtritt der zu reinigenden Abluft bleibt.

Die zu reinigende Abluft durchströmt die Füllung des Filters aus zu Bündeln 7 zusammengefaßten Folienstreifen 8. von oben nach unten. Mitgeführte Geruchsstoffe, Schadstoffe und organische Bestandteile werden von der Aktivkohle absorbiert und/oder in biochemische Stoffwechselvorgänge der Biozenose einbezogen. Ein Zuwachsen der vorhandenen Strömungsquerschnitte durch die aufwachsende Biozenose ist ausgeschlossen. Abgestorbener biologischer Bewuchs wird von der Strömung mitgenommen und kann in an sich bekannter Weise abgeschieden werden.

**Ansprüche**

1. Filter zur Reinigung von Fluiden mit einer Aktivkohle enthaltenden Füllung, dadurch gekennzeichnet, daß die Füllung aus flexiblen, ungeordneten, sich unregelmäßig berührenden Folienstreifen (8) aus Kunststoff besteht, die mit Aktivkohle beschichtet und mit einer Biozenose besiedelt sind.

2. Filter nach Anspruch 1, dadurch gekennzeichnet, daß die Folienstreifen (8) hängend angeordnet sind.

3. Filter nach Anspruch 1 oder 2, dadurch gekennzeichnet, daß die Filterfläche der Folienstreifen (8) bis zu 400 m$^2$/m$^3$ beträgt.

4. Filter nach einem der Ansprüche 1 bis 3, dadurch gekennzeichnet, daß die Filterfläche der Folienstreifen 200 bis 300 m$^2$/m$^3$ beträgt.

5. Filter nach einem der Ansprüche 1 bis 4, dadurch gekennzeichnet, daß die Folienstreifen (8) glatte oder geprägte Oberflächen aufweisen oder selbst geprägt sind.

6. Filter nach einem der Ansprüche 1 bis 5, dadurch gekennzeichnet, daß die Folienstreifen (8) zu Bündeln (7) zusammengefaßt sind.

7. Filter nach einem der Ansprüche 1 bis 6, dadurch gekennzeichnet, daß die Bündel (7) mittig verdrillt sind und mit dem verdrillten Bereich (9) über Tragstäbe (6) gehängt sind.

8. Filter nach einem der Ansprüche 1 bis 7, dadurch gekennzeichnet, daß die Bündel (7) mit ihren verdrillten Bereichen (9) auf den Tragstäben (6) befestigt sind.

9. Filter nach einen der Ansprüche 1 bis 8, dadurch gekennzeichnet, daß die Folienstreifen (8) an ihren freien Enden beschwert sind.

10. Filter nach einem der Ansprüche 1 bis 8, dadurch gekennzeichnet, daß die Folienstreifen (8) an ihren unteren Enden befestigt sind.

3

2

10

6

8

1

4

5

Fig. 1

7    7    7

6

6

6

9    9    9

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 274 633 (NORDDEUTSCHE SEEKABELWERKE AG) * Figuren 1-7; Ansprüche 1-14 * | 1 | B 01 D 53/00 C 02 F 3/10 |
| A | | 2-8 | |
| Y | EP-A-0 124 438 (S.A. D'ETUDES DE RECHERCHES) * Ansprüche 1-7 * | 1 | |
| A | EP-A-0 145 853 (F. SCHOELLER Jr. GmbH) * Ansprüche 1-11; Seite 5, Absatz 3 * | 1-7 | |
| A | GB-A-2 106 493 (FARRER SEWAGE LTD) * Figur 1 * | 1,10 | |
| A | GB-A-2 017 075 (J.L. COULTHARD) | 1 | |
| A | CH-A- 486 395 (DEUTSCHE BABCOCK) | 1 | |
| A | DE-U-8 801 268 (PLATZER SCHWEDENBAU GmbH) | 1 | |
| A | DE-A-3 428 798 (LINDE) | 1 | RECHERCHIERTE SACHGEBIETE (Int. Cl.5) |
| A | EP-A-0 240 929 (HERDING) | 1 | B 01 D C 02 F |
| A | EP-A-0 147 721 (DECHEMA) | 1 | |
| A | EP-A-0 076 898 (GEBRÜDER SULZER) | 1 | |

Der vorliegende Recherchenbericht wurde für alle Patentansprüche erstellt

| Recherchenort | Abschlußdatum der Recherche | Prüfer |
|---|---|---|
| DEN HAAG | 28-11-1989 | KANOLDT W.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)